# EUROPEAN PATENT SPECIFICATION

(11) **EP 3 529 291 B1**
(45) Date of publication and mention of the grant of the patent: **23.06.2021**
(21) Application number: 17790734.2
(22) Date of filing: 18.10.2017
(51) Int. Cl.: C08G 18/72, C08G 18/73, C08G 18/75, C08G 18/80, C08G 18/02, C08G 18/24

(54) **PRODUCTION OF PLASTICS BY CATALYTIC CROSSLINKING OF BLOCKED POLYISOCYANATES**
HERSTELLUNG VON KUNSTSTOFFEN DURCH KATALYTISCHE VERNETZUNG VON BLOCKIERTEN POLYISOCYANATEN
PRODUCTION DE MATIÈRES PLASTIQUES PAR RÉTICULATION CATALYTIQUE DE POLYISOCYANATES BLOQUÉS

(30) Priority: 18.10.2016 EP 16194348
(43) Date of publication of application: 28.08.2019
(73) Proprietor: Covestro Intellectual Property GmbH & Co. KG, 51373 Leverkusen (DE)
(72) Inventor: GOLLING, Florian, 40477 Düsseldorf (DE); BEUCK, Saskia, 51375 Leverkusen (DE); ACHTEN, Dirk, 51375 Leverkusen (DE); BEHNKEN, Gesa, 50670 Köln (DE)
(74) Representative: Levpat
(86) International application number: PCT/EP2017/076599
(87) International publication number: WO 2018/073299

(56) References cited:
- DE-T2- 69 210 932
- US-A- 6 133 397

## Description

The present invention relates to the production of plastics by crosslinking of blocked polyisocyanates. The plastics obtainable are characterized in that they are substantially free of urethane groups and the crosslinking of the monomers is predominantly effected by isocyanurate groups.

When isocyanates having free isocyanate groups are used, these have the disadvantage that they are only of limited storage stability after addition of the crosslinking catalyst because the catalyst mediates a crosslinking reaction even at low temperatures. Consequently, it is fundamentally desirable to use isocyanates having blocked isocyanate groups since these can be supplied directly as ready-to-use mixtures with a suitable catalyst and are nevertheless storage-stable until the blocking is removed by heating of the mixture and the reactive isocyanate groups are available for a crosslinking reaction.

WO 2015/166983 describes the production of potting compounds for light-emitting diodes by the polymerization of oligomeric polyisocyanates. It is not shown that blocked polyisocyanates are suitable for the preparation of the polymers described therein.

US 6,133,397 describes the use of oligomeric polyisocyanates for the production of coatings. There is mention of the use of blocked isocyanates. However, it is not shown which blocking agents are suitable. In addition, what are called "monoahls" are used, which contain hydroxyl groups and lead to urethane formation. Among the blocking agents mentioned are also the pyrazoles, which, as shown by the study underlying the present invention, are unsuitable as blocking agents. All examples shown in US 6,133,397 use dibutyltin dilaurate as catalyst. The study underlying the present invention has shown that this feature is detrimental because it decreases the hardness of the obtained coatings.

Surprisingly, in the study underlying the present application, it has been found that not all blocking agents are equally suitable when the isocyanate groups are to be predominantly crosslinked with one another, rather than crosslinking them with hydroxyl or thiol groups as in the case of preparation of the well-known polyurethanes. It has been found that isocyanates blocked with oximes, lactams and phenols are of good suitability for the process according to the invention, whereas it is not possible to use pyrazoles which are commonly known in principle as blocking agents for isocyanates in the production of polyurethane coatings. DE 69427374, DE 59503847 and US 2004/072931 describe the use and preparation of pyrazoles for this purpose.

Consequently, the present invention relates, in a first embodiment, to a process for preparing a polymer crosslinked by at least one structure selected from the group consisting of uretdione, isocyanurate, allophanate, urea, biuret, iminooxadiazinedione and oxadiazinetrione structures, comprising the steps of
a) providing a reaction mixture comprising
   (i) a polyisocyanate composition A containing blocked isocyanates, where the blocking agent is selected from the group consisting of phenols, amines, oximes and lactams, and
   (ii) at least one crosslinking catalyst B; and
b) curing the reaction mixture to give a polymer crosslinked by at least one structure selected from the group consisting of uretdione, isocyanurate, allophanate, urea, biuret, iminooxadiazinedione and oxadiazinetrione structures until not more than 20 % of the isocyanate groups originally present in the polyisocyanate composition A are present in the cured polymer;
with the proviso that the molar ratio of blocked and unblocked isocyanate groups to groups that are reactive toward isocyanate and are present in compounds containing more than one such group in the reaction mixture at the start of process step b) is at least 80%:20%.

The polymer produced by the process according to the invention is a plastic which is very substantially dimensionally stable at room temperature - in contrast to gels or liquids, for example. The term "plastic" as used here includes all customary classes of plastic, i.e. especially including thermosets, thermoplastics and elastomers.

The expression "providing a reaction mixture" means that, at the start of the process according to the invention, there is a mixture comprising the polyisocyanate composition A and at least one crosslinking catalyst B in a ratio which, after removal of the blocking agent from the isocyanate groups of the polyisocyanate composition A, permits crosslinking of said isocyanate groups by the crosslinking catalyst B.

The providing of a reaction mixture can mean that a corresponding reaction mixture is sourced in ready-to-use form from a supplier. The reaction mixture can alternatively be provided by mixing the polyisocyanate composition A and the at least one crosslinking catalyst B with one another prior to performance of process step b).

### Polyisocyanate composition A

The term "polyisocyanate" as used here is a collective term for compounds containing two or more isocyanate groups in the molecule (this is understood by the person skilled in the art to mean free isocyanate groups of the general structure -N=C=O). The simplest and most important representatives of these polyisocyanates are the diisocyanates. These have the general structure O=C=N-R-N=C=O where R typically represents aliphatic, alicyclic and/or aromatic radicals.

Because of the polyfunctionality (at least two isocyanate groups), it is possible to use polyisocyanates to prepare a multitude of polymers (e.g. polyurethanes, polyureas and polyisocyanurates) and low molecular weight compounds (for example those having uretdione, isocyanurate, allophanate, biuret, iminooxadiazinedione and/or oxadiazinetrione structure).

Where reference is made here to "polyisocyanates" in general terms, this means monomeric and/or oligomeric polyisocyanates alike. For understanding of many aspects of the invention, however, it is important to distinguish between monomeric diisocyanates and oligomeric polyisocyanates. Where reference is made here to "oligomeric polyisocyanates", this means polyisocyanates formed from at least two monomeric diisocyanate molecules, i.e. compounds that constitute or contain a reaction product formed from at least two monomeric diisocyanate molecules.

The preparation of oligomeric polyisocyanates from monomeric diisocyanates is also referred to in this application as modification of monomeric diisocyanates. This "modification" as used here means the reaction of monomeric diisocyanates to give oligomeric polyisocyanates having uretdione, isocyanurate, allophanate, biuret, iminooxadiazinedione and/or oxadiazinetrione structure.

For example, hexamethylene diisocyanate (HDI) is a "monomeric diisocyanate" since it contains two isocyanate groups and is not a reaction product of at least two polyisocyanate molecules:

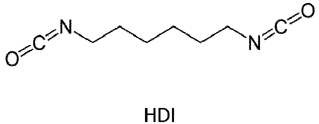

Reaction products which are formed from at least two HDI molecules and still have at least two isocyanate groups, by contrast, are "oligomeric polyisocyanates" within the context of the invention. Representatives of such "oligomeric polyisocyanates" are, proceeding from monomeric HDI, for example, HDI isocyanurate and HDI biuret, each of which are formed from three monomeric HDI units:

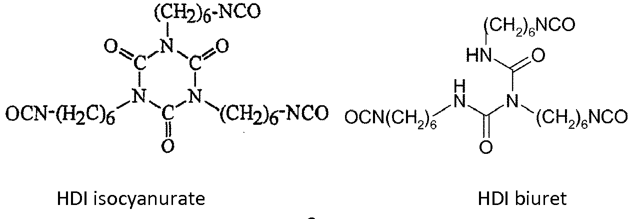

"Polyisocyanate composition A" in the context of the invention refers to the isocyanate component in the initial reaction mixture. In other words, this is the sum total of all compounds in the initial reaction mixture that have isocyanate groups. The polyisocyanate composition A is thus used as reactant in the process according to the invention. When reference is made here to "polyisocyanate composition A", especially to "providing the polyisocyanate composition A", this means that the polyisocyanate composition A exists and is used as reactant.

In principle, monomeric and oligomeric polyisocyanates are equally suitable for use in the polyisocyanate composition A according to the invention. Consequently, the polyisocyanate composition A may consist essentially of monomeric polyisocyanates or essentially of oligomeric polyisocyanates. It may alternatively comprise oligomeric and monomeric polyisocyanates in any desired mixing ratios.

In a preferred embodiment of the invention, the polyisocyanate composition A used as reactant in the trimerization has a low level of monomers (i.e. a low level of monomeric diisocyanates) and already contains oligomeric polyisocyanates. The expressions "having a low level of monomers" and "having a low level of monomeric diisocyanates" are used here synonymously in relation to the polyisocyanate composition A.

Results of particular practical relevance are established when the polyisocyanate composition A has a proportion of monomeric diisocyanates in the polyisocyanate composition A of not more than 20% by weight, especially not more than 15% by weight or not more than 10% by weight, based in each case on the weight of the polyisocyanate composition A. Preferably, the polyisocyanate composition A has a content of monomeric diisocyanates of not more than 5% by weight, especially not more than 2.0% by weight, more preferably not more than 1.0% by weight, based in each case on the weight of the polyisocyanate composition A. Particularly good results are established when the polymer composition A is essentially free of monomeric diisocyanates. "Essentially free" means here that the content of monomeric diisocyanates is not more than 0.5% by weight, based on the weight of the polyisocyanate composition A.

In a particularly preferred embodiment of the invention, the polyisocyanate composition A consists entirely or to an extent of at least 80%, 85%, 90%, 95%, 98%, 99% or 99.5% by weight of oligomeric polyisocyanates, based in each case on the weight of the monomeric and oligomeric polyisocyanates present in the polyisocyanate composition A. Preference is given here to a content of oligomeric polyisocyanates of at least 99% by weight. This content of oligomeric polyisocyanates relates to the polyisocyanate composition A as provided. In other words, the oligomeric polyisocyanates are not formed as intermediate during the process according to the invention, but are already present in the polyisocyanate composition A used as reactant on commencement of the reaction.

Polyisocyanate compositions which have a low level of monomers or are essentially free of monomeric isocyanates can be obtained by conducting, after the actual modification reaction, in each case, at least one further process step for removal of the unconverted excess monomeric diisocyanates. This removal of monomers can be effected in a particularly practical manner by processes known per se, preferably by thin-film distillation under high vacuum or by extraction with suitable solvents that are inert toward isocyanate groups, for example aliphatic or cycloaliphatic hydrocarbons such as pentane, hexane, heptane, cyclopentane or cyclohexane.

In a preferred embodiment of the invention, the polyisocyanate composition A according to the invention is obtained by modifying monomeric diisocyanates with subsequent removal of unconverted monomers.

In a particular embodiment of the invention, a polyisocyanate composition A having a low level of monomers, however, contains an extra monomeric diisocyanate. In this context, "extra monomeric diisocyanate" means that it differs from the monomeric diisocyanates which have been used for preparation of the oligomeric polyisocyanates present in the polyisocyanate composition A.

Addition of extra monomeric diisocyanate may be advantageous for achievement of specific technical effects, for example a particular hardness. Results of particular practical relevance are established when the polyisocyanate composition A has a proportion of extra monomeric diisocyanate in the polyisocyanate composition A of not more than 50% by weight, preferably not more than 35% by weight, more preferably not more than 20% by weight and most preferably not more than 10% by weight, based in each case on the weight of the polyisocyanate composition A. Preferably, the polyisocyanate composition A has a content of extra monomeric diisocyanate of not more than 5% by weight, especially not more than 2.0% by weight, more preferably not more than 1.0% by weight, based in each case on the weight of the polyisocyanate composition A.

In a further particular embodiment of the process according to the invention, the polyisocyanate composition A contains monomeric monoisocyanates or monomeric isocyanates having an isocyanate functionality greater than two, i.e. having more than two isocyanate groups per molecule. The addition of monomeric monoisocyanates or monomeric isocyanates having an isocyanate functionality greater than two has been found to be advantageous in order to influence the network density of the coating. Results of particular practical relevance are established when the polyisocyanate composition A has a proportion of monomeric monoisocyanates or monomeric isocyanates having an isocyanate functionality greater than two in the polyisocyanate composition A of not more than 20% by weight, especially not more than 15% by weight or not more than 10% by weight, based in each case on the weight of the polyisocyanate composition A. Preferably, the polyisocyanate composition A has a content of monomeric monoisocyanates or monomeric isocyanates having an isocyanate functionality greater than two of not more than 5% by weight, especially not more than 2.0% by weight, more preferably not more than 1.0% by weight, based in each case on the weight of the polyisocyanate composition A. Preferably, no monomeric monoisocyanate or monomeric isocyanate having an isocyanate functionality greater than two is used in the trimerization reaction according to the invention.

The oligomeric polyisocyanates may, in accordance with the invention, especially have uretdione, isocyanurate, allophanate, biuret, iminooxadiazinedione and/or oxadiazinetrione structure. In one embodiment of the invention, the oligomeric polyisocyanates have at least one of the following oligomeric structure types or mixtures thereof:

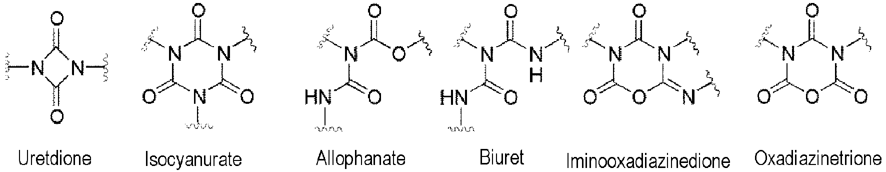

In a preferred embodiment of the invention, a polymer composition A wherein the isocyanurate structure component is at least 50 mol%, preferably at least 60 mol%, more preferably at least 70 mol%, even more preferably at least 80 mol%, even more preferably still at least 90 mol% and especially preferably at least 95 mol%, based on the sum total of the oligomeric structures from the group consisting of uretdione, isocyanurate, allophanate, biuret, iminooxadiazinedione and oxadiazinetrione structure present in the polyisocyanate composition A, is used.

In a further embodiment of the invention, in the process according to the invention, a polyisocyanate composition A containing, as well as the isocyanurate structure, at least one further oligomeric polyisocyanate having uretdione, biuret, allophanate, iminooxadiazinedione and oxadiazinetrione structure and mixtures thereof is used.

The proportions of the uretdione, isocyanurate, allophanate, biuret, iminooxadiazinedione and/or oxadiazinetrione structures in the polyisocyanates A can be determined, for example, by NMR spectroscopy. Preferably, it is possible here to use ¹³C NMR spectroscopy, preferably in proton-decoupled form, since the oligomeric structures mentioned give characteristic signals.

Irrespective of the underlying oligomeric structure (uretdione, isocyanurate, allophanate, biuret, iminooxadiazinedione and/or oxadiazinetrione structure), the oligomeric polyisocyanate composition A for use in the process according to the invention and/or the oligomeric polyisocyanates present therein preferably have a (mean) NCO functionality of 2.0 to 5.0, preferably of 2.3 to 4.5.

Results of particular practical relevance are established when the polyisocyanate composition A to be used in accordance with the invention has a content of isocyanate groups of 8.0% to 28.0% by weight, preferably of 14.0% to 25.0% by weight, based in each case on the weight of the polyisocyanate composition A. Said isocyanate groups may be in blocked or free form. They are preferably in blocked form, as defined further down in this application. The abovementioned isocyanate content in that case is based on the theoretical proportion of isocyanate groups after removal of the blocking agent.

Preparation processes for the oligomeric polyisocyanates having uretdione, isocyanurate, allophanate, biuret, iminooxadiazinedione and/or oxadiazinetrione structure that are to be used in accordance with the invention in the polyisocyanate composition A are described, for example, in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 and DE-A 3 928 503 or in EP-A 0 336 205, EP-A 0 339 396 and EP-A 0 798 299.

In an additional or alternative embodiment of the invention, the polyisocyanate composition A according to the invention is defined in that it contains oligomeric polyisocyanates which have been obtained from monomeric diisocyanates, irrespective of the nature of the modification reaction used, with observation of an oligomerization level of 5% to 45%, preferably 10% to 40%, more preferably 15% to 30%. "Oligomerization level" is understood here to mean the percentage of isocyanate groups originally present in the starting mixture which are consumed during the preparation process to form uretdione, isocyanurate, allophanate, biuret, iminooxadiazinedione and/or oxadiazinetrione structures.

Suitable polyisocyanates for production of the polyisocyanate composition A for use in the process according to the invention and the monomeric and/or oligomeric polyisocyanates present therein are any desired polyisocyanates obtainable in various ways, for example by phosgenation in the liquid or gas phase or by a phosgene-free route, for example by thermal urethane cleavage. Particularly good results are established when the polyisocyanates are monomeric diisocyanates. Preferred monomeric diisocyanates are those having a molecular weight in the range from 140 to 400 g/mol, having aliphatically, cycloaliphatically, araliphatically and/or aromatically bonded isocyanate groups, for example 1,4-diisocyanatobutane (BDI), 1,5-diisocyanatopentane (PDI), 1,6-diisocyanatohexane (HDI), 2-methyl-1,5-diisocyanatopentane, 1,5-diisocyanato-2,2-dimethylpentane, 2,2,4- or 2,4,4-trimethyl-1,6-diisocyanatohexane, 1,10-diisocyanatodecane, 1,3- and 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-isocyanato-3,3,5-trimethyl-5-isocyanatomethylcyclohexane (isophorone diisocyanate; IPDI), 1-isocyanato-1-methyl-4(3)-isocyanatomethylcyclohexane, 2,4'- and 4,4'-diisocyanatodicyclohexylmethane (H12MDI), 1,3- and 1,4-bis(isocyanatomethyl)cyclohexane, bis(isocyanatomethyl)norbornane (NBDI), 4,4'-diisocyanato-3,3'-dimethyldicyclohexylmethane, 4,4'-diisocyanato-3,3',5,5'-tetramethyldicyclohexylmethane, 4,4'-diisocyanato-1,1'-bi(cyclohexyl), 4,4'-diisocyanato-3,3'-dimethyl-1,1'-bi(cyclohexyl), 4,4'-diisocyanato-2,2',5,5'-tetramethyl-1,1'-bi(cyclohexyl), 1,8-diisocyanato-p-menthane, 1,3-diisocyanatoadamantane, 1,3-dimethyl-5,7-diisocyanatoadamantane, 1,3- and 1,4-bis(isocyanatomethyl)benzene (xylylene diisocyanate; XDI), 1,3- and 1,4-bis(1-isocyanato-1-methylethyl)benzene (TMXDI) and bis(4-(1-isocyanato-1-methylethyl)phenyl) carbonate, 2,4- and 2,6-diisocyanatotoluene (TDI), 2,4'- and 4,4'-diisocyanatodiphenylmethane (MDI), 1,5-diisocyanatonaphthalene and any desired mixtures of such diisocyanates. Further diisocyanates which are likewise suitable are additionally found, for example, in Justus Liebigs Annalen der Chemie Volume 562 (1949) p. 75-136.

Suitable monomeric monoisocyanates which can likewise optionally be used in the polyisocyanate composition A are, for example, n-butyl isocyanate, n-amyl isocyanate, n-hexyl isocyanate, n-heptyl isocyanate, n-octyl isocyanate, undecyl isocyanate, dodecyl isocyanate, tetradecyl isocyanate, cetyl isocyanate, stearyl isocyanate, cyclopentyl isocyanate, cyclohexyl isocyanate, 3- or 4-methylcyclohexyl isocyanate or any desired mixtures of such monoisocyanates. An example of a monomeric isocyanate having an isocyanate functionality greater than two which can optionally be added to the polyisocyanate composition A is 4-isocyanatomethyloctane 1,8-diisocyanate (triisocyanatononane; TIN).

In one embodiment of the invention, the polyisocyanate composition A contains not more than 30% by weight, especially not more than 20% by weight, not more than 15% by weight, not more than 10% by weight, not more than 5% by weight or not more than 1% by weight, based in each case on the weight of the polyisocyanate composition A, of aromatic polyisocyanates. As used here, "aromatic polyisocyanate" means a polyisocyanate having at least one aromatically bonded isocyanate group.

Aromatically bonded isocyanate groups are understood to mean isocyanate groups bonded to an aromatic hydrocarbyl radical.

In a preferred embodiment of the process according to the invention, a polyisocyanate composition A having exclusively aliphatically and/or cycloaliphatically bonded isocyanate groups is used.

It has been found in the study underlying the present invention, that the use of cycloaliphatic polyisocyanates leads to polymers with an increased glass transition temperature. Therefore, in a preferred embodiment of the present invention, the polyisocyanate composition A based on its total weight comprises at least 10 wt.-%, preferably at least 20 wt.-%, more preferably at least 30 wt.-%, even more preferably at least 40 wt.-% and most preferably at least 60 wt.-% of at least one monomeric cycloaliphatic polyisocyanate and / or at least one oligomeric polyisocyanate comprising a cycloaliphatic polyisocyanate. In one embodiment of the present invention said oligomeric polyisocyanate consists of at least one cycloaliphatic polyisocyanate. For this purpose, all cycloaliphatic polyisocyanates described in further detail below may be used. However, a preferred cycloaliphatic polyisocyanate for this embodiment of the present invention is isophorone diisocyanate (IPDI).

Aliphatically and cycloaliphatically bonded isocyanate groups are respectively understood to mean isocyanate groups bonded to an aliphatic and cycloaliphatic hydrocarbyl radical.

In another preferred embodiment of the process according to the invention, a polyisocyanate composition A consisting of or comprising one or more oligomeric polyisocyanates is used, where the one or more oligomeric polyisocyanates has/have exclusively aliphatically and/or cycloaliphatically bonded isocyanate groups.

In a further embodiment of the invention, the polyisocyanate composition A consists to an extent of at least 50%, 70%, 85%, 90%, 95%, 98% or 99% by weight, based in each case on the weight of the polyisocyanate composition A, of polyisocyanates having exclusively aliphatically and/or cycloaliphatically bonded isocyanate groups. Practical experiments have shown that particularly good results can be achieved with polyisocyanate compositions A in which the oligomeric polyisocyanates present therein have exclusively aliphatically and/or cycloaliphatically bonded isocyanate groups.

In a particularly preferred embodiment of the process according to the invention, a polyisocyanate composition A is used which consists of or comprises one or more oligomeric polyisocyanates, where the one or more oligomeric polyisocyanates is/are based on 1,4-diisocyanatobutane (BDI), 1,5-diisocyanatopentane (PDI), 1,6-diisocyanatohexane (HDI), isophorone diisocyanate (IPDI) or 4,4'-diisocyanatodicyclohexylmethane (H12MDI) or mixtures thereof. Preference is given here to polyisocyanate compositions A containing oligomeric HDI. Particular preference is given to polyisocyanate compositions A containing oligomeric HDI and oligomeric IPDI.

In a further embodiment of the invention, in the process according to the invention, polyisocyanate compositions A having a viscosity greater than 500 mPas and less than 200 000 mPas, preferably greater than 1000 mPas and less than 100 000 mPas, more preferably greater than 1000 mPas and less than 50 000 mPas, measured according to DIN EN ISO 3219 and 21°C, are used.

### Blocked isocyanates

At least some of the polyisocyanates present in the polyisocyanate composition A are blocked. "Blocking" means that the isocyanate groups of a polyisocyanate have been reacted with a further compound, the blocking agent, such that the blocked isocyanate groups no longer exhibit the reactivity typical of free isocyanate groups. Only heating of the blocked isocyanate leads to elimination of the blocking agent and restores the reactivity of the isocyanate groups.

According to the invention, at least one compound selected from the group consisting of lactams, oximes, amines and phenols is used as blocking agent. More preferably, the blocking is effected with at least one lactam and/or oxime. Preferred lactams are selected from the group consisting of δ-valerolactam, laurolactam and ε-caprolactam. A particularly preferred lactam is ε-caprolactam. Preferred oximes are selected from the group consisting of 2-butanone oxime, formaldoxime, acetophenone oxime, diethyl glyoxime, pentanone oxime, hexanone oxime, cyclohexanone oxime and hydroxamic acid. A particularly preferred oxime is 2-butanone oxime. Preferred phenols are selected from the group consisting of phenol, 2,3,5-trimethylphenol, 2,3,6-trimethylphenol, 2,4,6-trimethylphenol, o-cresol, m-cresol, p-cresol, 2-tert-butylphenol and 4-tert-butylphenol. Preferred amines are selected from the group consisting of diisopropylamine, tetramethylpiperidine and N-methyl-tert-butylamine, tert-butylbenzylamine, n-dibutylamine, 3-tert-butylaminomethyl propionate.

It is possible in accordance with the invention to use a mixture of two, three or more of the aforementioned compounds as blocking agents.

In a preferred embodiment of the present invention, the predominant portion of the isocyanate groups present in the polyisocyanate composition A is blocked. More preferably at least 90% by weight, even more preferably at least 95% by weight and most preferably 98% by weight of the isocyanate groups present in the polyisocyanate composition A are blocked. Most preferably, the polyisocyanate composition A does not contain any detectable free isocyanate groups. Free isocyanate groups can be determined by means of IR spectroscopy. The NCO band is observed at 2700 cm⁻¹.

### Crosslinking catalyst B

Suitable crosslinking catalysts B for the process according to the invention are in principle all compounds which accelerate the crosslinking of isocyanate groups to give at least one structure selected from the group consisting of uretdione, isocyanurate, allophanate, urea, biuret, iminooxadiazinedione and oxadiazinetrione structures.

Particularly preferred crosslinking catalysts B are those compounds which accelerate the trimerization of isocyanate groups to give isocyanurate structures. Since isocyanurate formation, depending on the catalyst used, is frequently accompanied by side reactions, for example dimerization to give uretdione structures or trimerization to form iminooxadiazinediones (called asymmetric trimers), and by allophanatization reactions in the case of presence of urethane groups in the starting polyisocyanate, the term "trimerization" shall also synonymously represent these reactions that proceed additionally in the context of the present invention.

In a particular embodiment, however, trimerization means that predominantly cyclotrimerizations of at least 50%, preferably at least 60%, more preferably at least 70% and especially at least 80% of isocyanate groups present in the polyisocyanate composition A to give isocyanurate structural units are catalysed. However, side reactions, especially those to give uretdione, allophanate and/or iminooxadiazinedione structures, typically occur and can even be used in a controlled manner in order to advantageously affect, for example, the Tg of the polyisocyanurate plastic obtained.

Suitable catalysts B for the process according to the invention are, for example, simple tertiary amines, for example triethylamine, tributylamine, N,N-dimethylaniline, N-ethylpiperidine or N,N'-dimethylpiperazine. Suitable catalysts are also the tertiary hydroxyalkylamines described in GB 2 221 465, for example triethanolamine, N-methyldiethanolamine, dimethylethanolamine, N-isopropyldiethanolamine and 1-(2-hydroxyethyl)pyrrolidine, or the catalyst systems known from GB 2 222 161 that consist of mixtures of tertiary bicyclic amines, for example DBU, with simple aliphatic alcohols of low molecular weight.

Further trimerization catalysts B suitable for the process according to the invention are, for example, the quaternary ammonium hydroxides known from DE-A 1 667 309, EP-A 0 013 880 and EP-A 0 047 452, for example tetraethylammonium hydroxide, trimethylbenzylammonium hydroxide, N,N-dimethyl-N-dodecyl-N-(2-hydroxyethyl)ammonium hydroxide, N-(2-hydroxyethyl)-N,N-dimethyl-N-(2,2'-dihydroxymethylbutyl)ammonium hydroxide and 1-(2-hydroxyethyl)-1,4-diazabicyclo[2.2.2]octane hydroxide (monoadduct of ethylene oxide and water with 1,4-diazabicyclo[2.2.2]octane), the quaternary hydroxyalkylammonium hydroxides known from EP-A 37 65 or EP-A 10 589, for example N,N,N-trimethyl-N-(2-hydroxyethyl)ammonium hydroxide, the trialkylhydroxylalkylammonium carboxylates that are known from DE-A 2631733, EP-A 0 671 426, EP-A 1 599 526 and US 4,789,705, for example N,N,N-trimethyl-N-2-hydroxypropylammonium p-tert-butylbenzoate and N,N,N-trimethyl-N-2-hydroxypropylammonium 2-ethylhexanoate, the quaternary benzylammonium carboxylates known from EP-A 1 229 016, such as N-benzyl-N,N-dimethyl-N-ethylammonium pivalate, N-benzyl-N,N-dimethyl-N-ethylammonium 2-ethylhexanoate, N-benzyl-N,N,N-tributylammonium 2-ethylhexanoate, N,N-dimethyl-N-ethyl-N-(4-methoxybenzyl)ammonium 2-ethylhexanoate or N,N,N-tributyl-N-(4-methoxybenzyl)ammonium pivalate, the tetrasubstituted ammonium α-hydroxycarboxylates known from WO 2005/087828, for example tetramethylammonium lactate, the quaternary ammonium or phosphonium fluorides known from EP-A 0 339 396, EP-A 0 379 914 and EP-A 0 443 167, for example N-methyl-N,N,N-trialkylammonium fluorides with C8-C10-alkyl radicals, N,N,N,N-tetra-n-butylammonium fluoride, N,N,N-trimethyl-N-benzylammonium fluoride, tetramethylphosphonium fluoride, tetraethylphosphonium fluoride or tetra-n-butylphosphonium fluoride, the quaternary ammonium and phosphonium polyfluorides known from EP-A 0 798 299, EP-A 0 896 009 and EP-A 0 962 455, for example benzyltrimethylammonium hydrogen polyfluoride, the tetraalkylammonium alkylcarbonates which are known from EP-A 0 668 271 and are obtainable by reaction of tertiary amines with dialkyl carbonates, or betaine-structured quaternary ammonioalkyl carbonates, the quaternary ammonium hydrogencarbonates known from WO 1999/023128, such as choline bicarbonate, the quaternary ammonium salts which are known from EP 0 102 482 and are obtainable from tertiary amines and alkylating esters of phosphorus acids, examples of such salts being reaction products of triethylamine, DABCO or N-methylmorpholine with dimethyl methanephosphonate, or the tetrasubstituted ammonium salts of lactams that are known from WO 2013/167404, for example trioctylammonium caprolactamate or dodecyltrimethylammonium caprolactamate.

Preferred catalysts B are carboxylates, i.e. the salts of aromatic or aliphatic carboxylic acids. Particular preference is given here to those carboxylates having good solubility in aprotic polar solvents. Solubility is good here when the concentration of the dissolved catalyst in the catalyst solvent is at least 0.5 % by weight, more preferably 1% by weight and even more preferably at least 2% by weight.

Suitable salts are the known sodium and potassium salts of linear or branched alkanecarboxylic acids having up to 14 carbon atoms, for example butyric acid, valeric acid, caproic acid, 2-ethylhexanoic acid, heptanoic acid, caprylic acid, pelargonic acid and higher homologues.

Very particular preference is given to use of potassium 2-ethylhexanoate and potassium neodecanoate as crosslinking catalyst B.

Likewise suitable as trimerization catalysts B for the process according to the invention are a multitude of different metal compounds. Suitable examples are the octoates and naphthenates of manganese, iron, cobalt, nickel, copper, zinc, zirconium, cerium or lead or mixtures thereof with acetates of lithium, sodium, potassium, calcium or barium that are described as catalysts in DE-A 3 240 613, the sodium and potassium salts of linear or branched alkanecarboxylic acids having up to 10 carbon atoms that are known from DE-A 3 219 608, for example of propionic acid, butyric acid, valeric acid, caproic acid, heptanoic acid, caprylic acid, pelargonic acid, capric acid and undecylenoic acid, the alkali metal or alkaline earth metal salts of aliphatic, cycloaliphatic or aromatic mono- and polycarboxylic acids having 2 to 20 carbon atoms that are known from EP-A 0 100 129, for example sodium or potassium benzoate, the alkali metal phenoxides known from GB-A 1 391 066 and GB-A 1 386 399, for example sodium or potassium phenoxide, the alkali metal and alkaline earth metal oxides, hydroxides, carbonates, alkoxides and phenoxides known from GB 809 809, alkali metal salts of enolizable compounds and metal salts of weak aliphatic or cycloaliphatic carboxylic acids, for example sodium methoxide, sodium acetate, potassium acetate, sodium acetoacetate, lead 2-ethylhexanoate and lead naphthenate, the basic alkali metal compounds complexed with crown ethers or polyether alcohols that are known from EP-A 0 056 158 and EP-A 0 056 159, for example complexed sodium or potassium carboxylates, the pyrrolidinone-potassium salt known from EP-A 0 033 581, the mono- or polynuclear complex of titanium, zirconium and/or hafnium known from application EP 13196508.9, for example zirconium tetra-n-butoxide, zirconium tetra-2-ethylhexanoate and zirconium tetra-2-ethylhexoxide, and tin compounds of the type described in European Polymer Journal, vol. 16, 147-148 (1979), for example dibutyltin dichloride, diphenyltin dichloride, triphenylstannanol, tributyltin acetate, tributyltin oxide, tin octoate, dibutyl(dimethoxy)stannane and tributyltin imidazolate.

Further trimerization catalysts suitable for the process according to the invention can be found, for example, in J. H. Saunders and K. C. Frisch, Polyurethanes Chemistry and Technology, p. 94 ff. (1962) and the literature cited therein.

If the curing of the polyisocyanate composition A in process step b) is to be conducted at room temperature, this is possible given selection of suitable catalysts. Crosslinking catalysts B) particularly suitable for curing at room temperature are sodium and potassium salts of aliphatic carboxylic acids having 2 to 20 carbon atoms in combination with complexing agents such as crown ethers or polyethylene glycols or polypropylene glycols and aliphatically substituted tin compounds.

Very particularly preferred crosslinking catalysts B for curing at room temperature are potassium acetate in combination with complexing agents such as crown ethers or polyethylene glycols or polypropylene glycols, tin octoate and/or tributyltin oxide.

The catalysts B can be used in the process according to the invention either individually or in the form of any desired mixtures with one another.

In the study underlying the present invention it has been surprisingly found that the use of cocatalysts as disclosed in US 6,133,397 leads to coatings of lower hardness. Therefore, in a preferred embodiment of the present invention at the beginning of method step b) the reaction mixture comprises not more than 0.2 wt.-%, preferably not more than 0.1 wt.-% and more preferably not more than 0.05 wt.-% of organic and inorganic compounds of iron, lead, tin, bismuth and zinc. The aforementioned values are calculated based on the solids content of the reaction mixture, i.e. its weight without water and organic solvents. For this embodiment, it is preferred that the curing in method step b) takes place at temperatures of at least 50 °C, more preferably at least 80 °C and most preferably at least 100 °C.

Preferably, said compounds have the oxidation states typical for the metal in question which are for iron II and III, for lead II, for tin IV, for bismuth III and for zinc II. Iron compounds thus limited are preferably iron(ii)-chloride and iron(III)-chloride. Bismuth compounds thus limited are preferably bismuth(III)-laurate, bismuth(III)-2-ethyl hexanoate, bismuth(III)-octoate and bismuth(III)-neodecanoate. Zinc compounds thus limited are preferably zinc chloride and zinc-2-ethyl caproate. Tin compounds thus limited are preferably tin(II)-octoate, tin(II)-ethyl caproate, tin(II)-palmitate, dibutyltin(IV)dilaurate (DBTL) and dibutyltin(IV) dichloride. A preferred lead compound thus limited is preferably lead octoate.

In a more preferred embodiment, organic and inorganic compounds of tin and bismuth are limited to the concentrations set forth above. Most preferably, the contents of DBTL and bismuth(III)-2-ethyl hexanoate are limited to the concentrations set for above.

In an even more preferred embodiment of the present invention, the reaction mixture is free of amounts of organic tin compounds and metal acetylacetonates that lead to the formation of relevant amounts of urea structures.

The term refers to organic tin compounds a) mono-, di- and triorganyltin compounds of the general formula

R¹₄₋ₙSnXₙ (I);

R¹₂-SnX' (II);

R¹₃SnX'_{1/2} (III);

or

R¹SnX'_{3/2} (IV).

In these formulae, n = 1, 2 or 3, preferably n = 2.

R¹ is a linear or branched C₁-C₃₀-alkyl chain, a C₅-C₁₄-cycloalkyl chain or a C₆-C₁₄-aryl radical.

The hydrogen atoms of the linear or branched C₁-C₃₀-alkyl, C₃-C₁₄-cycloalkyl or C₆-C₁₄-aryl radicals may also be replaced by halogen atoms, OH-, NH₂-, NO₂- or C₁₋₆-alkyl radicals.

X is selected from the group consisting of a halogen, -OR¹, -OC(O)R¹-OH, -SR¹, -NR¹₂, -NHR¹, -OSiR¹₃, and -OSi(OR)¹₃, where R¹ has the definition given above.

The X, X' and R1 radicals, if they occur more than once in the molecule, are alike or different. They are preferably alike.

X' is O or S; preferably, X' is S.

Preference is given to an organic tin compound defined by the general formula (I).

Organic tin compounds are more preferably understood to mean the following compounds: dioctyltin dithioglycolate, dioctyltin dilaurate (DOTL), dibutyltin dilaurate (DBTL), monobutyltin tris(2-ethylhexanoate), dioctyltin diketanoate, dibutyltin diketanoate, dioctyltin diacetate (DOTA), dioctyltin oxide (DOTO), dibutyltin diacetate (DBTA), dibutyltin oxide (DBTO), monobutyltin dihydroxychloride and organotin oxide.

Most preferably, the reaction mixture is also free of compounds based on other metals selected from the group consisting of Bi³⁺, Al³⁺, Co²⁺, Zr⁴⁺, Zn²⁺, Ca²⁺ and Cr³⁺ with the aforementioned ligands in a concentration that brings about crosslinking of isocyanate groups via urea groups. Compounds of this kind are especially bismuth tris(octoate), aluminium dionate complex, cobalt octoate, zirconium bis(octoate), zinc bis(octoate), calcium bis(octoate), chromium tris(octoate).

Metal acetylacetonates are understood to mean the metal salts of acetylacetonate. These have the general formula M(AcAc)ₙ. The counterions are selected from the group consisting of Al³⁺, Cr³⁺, Fe³⁺, Mn²⁺, Ni²⁺, Sn²⁺, Ti⁴⁺, Zn²⁺ and Zr⁴⁺. n is a whole number, the value of which depends on the charge of the metal cation. Compounds of this kind are especially Al(AcAc)₃, Cr(AcAc)₃, Fe(AcAc)₃, Mn(AcAc)₂, Sn(AcAc)₂, Ti(AcAc)₄, Zn(AcAc)₂, Zr(AcAc)₄.

### Isocyanate-reactive groups in the reaction mixture

The formation of urethane groups is less preferred in the context of the process. For this reason, it is preferable that the reaction mixture which is cured in process step b) is essentially free of hydroxyl groups, amino groups and thiol groups. The reaction mixture is "essentially free of hydroxyl groups, amino groups and thiol groups" when it contains not more than 50 %, more preferably not more than 30 %, even more preferably not more than 20 % and most preferably not more than 10 % of the aforementioned groups. The aforementioned proportions are calculated as the molar ratio of isocyanate groups relative to the sum total of hydroxyl groups, amino groups and thiol groups.

It is especially preferable that the crosslinking of the polyisocyanates present in the isocyanate composition A proceeds predominantly through the direct reaction of isocyanate groups with one another. According to the invention, there is also a "reaction of isocyanate groups with one another" when the isocyanate group present in a polyisocyanate first reacts with elimination of carbon dioxide to give an amino group and then is reacted further with an isocyanate group to give a urea group. Predominant crosslinking of the polyisocyanates in the polyisocyanate composition A requires that the reaction mixture that cures in process step b) contains only a low level of compounds, if any, that bear more than one group which is reactive with an isocyanate groups and is not itself an isocyanate group. Isocyanate-reactive groups in the context of this application are hydroxyl, amino and thiol groups. It does not matter here whether said compound bears only isocyanate-reactive groups of the same kind (e.g. two or more hydroxyl groups) or of different kinds (e.g. one hydroxyl group and one amino group). Compounds having more than one group reactive with isocyanate groups are preferably diols, higher polyhydric alcohols, diamines, triamines and polythiols.

This exclusion does not cover mono- or polyamines that arise from polyisocyanates in the polyisocyanate composition A through elimination of carbon dioxide.

Consequently, the molar ratio of blocked and unblocked isocyanate groups to groups that are reactive toward isocyanate and are present in compounds containing more than one such group in the reaction mixture at the start of process step b) is at least 80 % : 20 %, more preferably at least 90 % : 10 % and even more preferably at least 95 % : 5 %.

### Curing of the polyisocyanate composition A

The expression "curing of the isocyanate composition A" relates to a process in which the isocyanate groups present in the polyisocyanate composition react with one another and hence crosslink the monomeric and/or oligomeric isocyanates present in the polyisocyanate composition A. Since this reaction is promoted by the crosslinking catalyst B, it is also referred to as "catalytic crosslinking".

Since catalytic crosslinking of isocyanate groups is impossible as long as the blocking agent is bonded to the isocyanate groups, the blocking agent first has to be removed in order to restore the reactivity of the isocyanate groups. Since the elimination of the blocking agent from the isocyanate group is a temperature-dependent process, the reaction mixture provided in process step a) has to be heated to a suitable temperature at the start of the process step. This temperature is at least 140°C, more preferably at least 160°C and most preferably at least 180°C. These temperatures are maintained until the blocking agent has been eliminated from at least 90 mol%, more preferably at least 95 mol%, of the originally blocked isocyanate groups.

The subsequent crosslinking reaction between the free isocyanate groups can be conducted at the temperatures determined by the catalyst used. These may also be below the temperature required for removal of the blocking agent.

Depending on the catalyst chosen in each case, the optimal reaction temperature is 0 to 250°C, preferably from 40 to 200°C, more preferably from 100 to 190°C and most preferably from 130 to 190°C. Particularly advantageously, the polymerization can be conducted at temperatures above the glass transition point of the desired products. In a particular embodiment of the invention, the temperature of the reaction mixture in the course of the reaction reaches more than 80°C but remains below 300°C.

If the suitable catalysts described further up in this application are used, the catalytic crosslinking of the free isocyanate groups can also be effected at room temperature.

Depending on the catalyst B chosen and the reaction temperature chosen, the trimerization reaction is very substantially complete, as defined below, after a period of a few seconds up to several hours. In practice, it has been found that the trimerization reaction at reaction temperatures of greater than 80°C is typically very substantially complete within less than 12 h. Where reference is made here to "reaction temperatures", this means the ambient temperature. In a preferred embodiment of the invention, the trimerization reaction at a reaction temperature of greater than 80°C is complete within less than 12 h, more preferably less than 5 h, most preferably less than 1 h. The progress of the reaction can initially still be determined by titrimetric determination of the NCO content, but gelation and solidification of the reaction mixture set in rapidly as the reaction progresses, which makes wet-chemical analysis methods impossible. The further conversion of isocyanate groups can then be monitored only by spectroscopic methods, for example by IR spectroscopy with reference to the intensity of the isocyanate band at about 2270 cm⁻¹.

The polyisocyanurate plastics according to the invention are preferably polymers with a high degree of conversion, i.e. those in which the crosslinking reaction is very substantially complete. A crosslinking reaction can be regarded as "very substantially complete" in the context of the present invention when at least 80%, preferably at least 90%, more preferably at least 95%, of the free isocyanate groups originally present in the polyisocyanate composition A have reacted. In other words, there are preferably not more than 20%, not more than 10%, more preferably not more than 5%, of the isocyanate groups originally present in the polyisocyanate composition A in the cured polymer. This can be achieved by conducting the catalytic crosslinking in the process according to the invention at least up to a conversion level at which only, for example, not more than 20% of the isocyanate groups originally present in the polyisocyanate composition A are present, such that a polymer with high conversion is obtained. The percentage of isocyanate groups still present can be determined by comparison of the content of isocyanate groups in % by weight in the original polyisocyanate composition A with the content of isocyanate groups in % by weight in the reaction product, for example by the aforementioned comparison of the intensity of the isocyanate band at about 2270 cm⁻¹ by means of IR spectroscopy. As an internal reference, CH2 and CH3 vibrations are used as a reference parameter for the NCO band and it is expressed relative thereto. This is employed both for the reference measurement prior to crosslinking and for the measurement after crosslinking.

In a preferred embodiment, the total content of extractable isocyanate-containing compounds in the polymer according to the invention, based on the polyisocyanate composition A used, is less than 1% by weight. The total content of extractable isocyanate-containing compounds can be determined in a particularly practicable manner by methods known per se, preferably by extraction with suitable solvents that are inert toward isocyanate groups, for example aliphatic or cycloaliphatic hydrocarbons such as pentane, hexane, heptane, cyclopentane or cyclohexane, and subsequent determination of the isocyanate group content in the extract, for example by IR spectroscopy.

The crosslinking of the isocyanate groups in process step b) is preferably effected with formation of at least one structure selected from the group consisting of uretdione, isocyanurate, allophanate, urea, biuret, iminooxadiazinedione and oxadiazinetrione structures.

What structure or structures are actually present in the crosslinked polyisocyanate composition A in what molar ratios depends on the selection of the catalyst and the temperature in process step b). Another factor is what crosslinking structures were present in any oligomeric polyisocyanate that was present in the reaction mixture provided in process step a).

In a preferred embodiment of the present invention, the cured polyisocyanate composition A contains at least 50 mol%, preferably at least 60 mol%, more preferably at least 70 mol% and most preferably at least 80 mol% of isocyanurate structures, based on the total amount of the uretdione, isocyanurate, allophanate, urethane, urea, biuret, iminooxadiazinedione and oxadiazinetrione structures present in the cured polyisocyanate composition A.

Since urethane groups worsen the thermal stability of the polymer, it is preferable that the cured polyisocyanate composition A contains not more than 30 mol%, more preferably not more than 20 mol%, even more preferably not more than 10 mol% and most preferably not more than 5 mol% of urethane structures, based on the total amount of the urethane, isocyanurate, allophanate, urethane, urea, biuret, iminooxadiazinedione and oxadiazinetrione structures present in the cured polyisocyanate composition A. Most preferably, the molar proportion of urethane structures as defined above is less than 1 mol%.

In a particularly preferred embodiment of the present invention, the cured polyisocyanate composition A contains not more than 30 mol%, preferably not more than 20 mol%, more preferably not more than 10 mol% and most preferably not more than 5 mol% of urea structures, based on the total amount of the uretdione, isocyanurate, allophanate, urethane, urea, biuret, iminooxadiazinedione and oxadiazinetrione structures present in the cured polyisocyanate composition A. Most preferably, the molar proportion of urea structures as defined above is less than 1 mol%.

In a very particularly preferred embodiment of the present invention, the sum total of the urethane and urea structures in the cured polyisocyanate composition A is not more than 30 mol%, preferably not more than 20 mol%, more preferably not more than 10 mol% and most preferably not more than 5 mol%, based on the total amount of the uretdione, isocyanurate, allophanate, urethane, urea, biuret, iminooxadiazinedione and oxadiazinetrione structures present in the cured polyisocyanate composition A. Most preferably, the molar proportion of the sum total of urea and urethane structures as defined above is less than 1 mol%.

The cured polyisocyanate composition A preferably has a glass transition temperature of at least 80°C, more preferably of at least 100°C, even more preferably of at least 120°C and most preferably of at least 150°C.

Glass transition temperatures exceeding 120°C are particularly advantageously achieved by coatings in which the total proportion of urethane and urea groups in the amount of uretdione, isocyanurate, allophanate, urethane, urea, biuret, iminooxadiazinedione and oxadiazinetrione structures present is less than 20 mol%, preferably less than 10 mol% and most preferably less than 5 mol%.

### Dimensions of the polymer

In a preferred embodiment of the present invention, the polymer that results from the process according to the invention has an extent in at least one dimension of not more than 10 mm, more preferably not more than 5 mm, even more preferably not more than 2 mm and most preferably not more than 1 mm.

### Application to surface

The process according to the invention is particularly suitable for coating of surfaces.

Consequently, the process, in a preferred embodiment of the present invention, contains a process step in which the reaction mixture provided in process step a), prior to the catalytic crosslinking in process step b), is applied to a surface.

The reaction mixture can be applied by different methods that are known per se. For production of coatings, for example paints, it is possible to apply reaction mixtures comprising the catalyst B and the polyisocyanate composition A in one or more layers to any desired substrates, for example by spraying, painting, dipping, casting, flow-coating, or with the aid of brushes, rollers, nozzles or coating bars, or by printing techniques, preferably screenprinting, valvejet or piezo printing. Prior to the coating, the substrate can optionally also be provided with customary primers.

In a preferred embodiment, in the case of use of solvent-containing polyisocyanate compositions, the solvent can be evaporated off after application to the surface, but before the catalytic crosslinking in process step b), such that an essentially solvent-free but as yet uncrosslinked coating is present at the start of process step b). The coating is essentially solvent-free when at least 90% by weight, more preferably at least 95% by weight and most preferably at least 99% by weight of the solvent originally present in the polyisocyanate composition has evaporated. This process step can be effected at room temperature, but it is also possible to accelerate the evaporation of the solvent by means of elevated temperatures, provided that these temperatures are below the temperatures at which the blocking agent is eliminated from the isocyanate groups. This is preferably the temperature range between 10 and 140°C, more preferably 40 to 140°C and especially preferably 60 to 120°C.

Frequently, blocked polyisocyanates are admixed with solvents, since the viscosity of blocked polyisocyanates is sufficiently high that processing, especially application to a surface, is not possible. In this case, solvent-free blocked polyisocyanates may be used by heating the compositions that are very viscous at room temperature, in order in this way to lower the viscosity to a degree acceptable for processing. Depending on the temperature-dependent change in viscosity of the particular combination of polyisocyanate and blocking agent, this temperature may be within the range between 50 and 120°C.

Preferably, the surface to be coated consists essentially of a material selected from the group consisting of mineral substances, metal, rigid plastics, flexible plastics, textiles, leather, wood, wood derivatives and paper. Mineral substances are preferably selected from the group consisting of glass, stone, ceramic materials and concrete.

A surface consists "essentially" of one of the aforementioned materials when not more than 50% of the area, preferably not more than 30% of the area and most preferably not more than 20% of the area that comes into contact with the reaction mixture consists of an extraneous material.

In a further embodiment, the present invention relates to a coated material which has been coated by the process described above.

### Use of blocked polyisocyanates for preparation of a polymer

In yet a further embodiment, the present invention relates to the use of blocked isocyanates for preparation of polymers crosslinked by at least one structure selected from the group consisting of uretdione, isocyanurate, allophanate, urea, biuret, iminooxadiazinedione and oxadiazinetrione structures. In this case, the proportion of biuret, urethane, allophanate, thiourethane and thioallophanate groups in the polymer prepared is preferably not more than 10 mol%, more preferably not more than 5 mol% and most preferably not more than 1 mol%.

The blocked isocyanates are preferably blocked monomeric or oligomeric polyisocyanates as described further up in this application.

In a particularly preferred embodiment, the blocked polyisocyanates are used in combination with a crosslinking catalyst B as described above in this application for preparation of a polymer.

It is especially preferable that the use is effected in the substantial absence of hydroxyl groups, amino groups and thiol groups. This is the case when, in the use, not more than 50%, more preferably not more than 30%, even more preferably not more than 20% and most preferably not more than 10% of the aforementioned groups are present. The aforementioned proportions are calculated as the molar ratio of isocyanate groups relative to the sum total of hydroxyl groups, amino groups and thiol groups.

The present invention enables the use of blocked polyisocyanates for preparation of polymers, especially coatings having high glass transition temperature. Since the polyisocyanate composition A, according to the invention, may be entirely devoid of free (and hence reactive) isocyanate groups, reaction mixtures of crosslinking catalyst and blocked polyisocyanate are storage-stable for a very long period. The storage stability is preferably at least one week and more preferably at least one month. In addition, reaction mixtures which do not contain any free isocyanate groups are non-toxic and hence marketable and usable in many countries without special warning notices or safety measures.

All the other definitions given for the process according to the invention also apply to the inventive use of the blocked isocyanates.

In a 1. item the present invention relates to a process for preparing a polymer crosslinked by at least one structure selected from the group consisting of uretdione, isocyanurate, allophanate, urea, biuret, iminooxadiazinedione and oxadiazinetrione structures, comprising the steps of
a) providing a reaction mixture comprising
   (i) a polyisocyanate composition A containing blocked isocyanates, where the blocking agent is selected from the group consisting of phenols, oximes and lactams, and
   (ii) at least one crosslinking catalyst B; and
b) curing the polyisocyanate composition A to give a polymer crosslinked by at least one structure selected from the group consisting of uretdione, isocyanurate, allophanate, urea, biuret, iminooxadiazinedione and oxadiazinetrione structures;
with the proviso that the molar ratio of blocked and unblocked isocyanate groups to groups that are reactive toward isocyanate and are present in compounds containing more than one such group in the reaction mixture at the start of process step b) is at least 80%:20%.

In a 2. item the present invention relates to the process according to item 1, wherein the polymer formed has an extent of less than 10 mm in at least one dimension.

In a 3. item the present invention relates to the process according to either of items 1 and 2, wherein the blocked polyisocyanates in the polyisocyanate composition A have a low level of monomers.

In a 4. item the present invention relates to the process according to any of items 1 to 3, wherein the polymer obtained in process step b) has a glass transition temperature of at least 80°C.

In a 5. item the present invention relates to the process according to any of items 1 to 4, wherein the crosslinking catalyst B comprises a carboxylate.

In a 6. item the present invention relates to the process according to item 5, wherein the carboxylate is potassium 2-ethylhexanoate.

In a 7. item the present invention relates to the process according to any of items 1 to 6, wherein the curing in process step b) is conducted at a temperature of at least 130°C.

In an 8. item the present invention relates to the process according to any of items 1 to 7, wherein the cured reaction mixture contains at least 50 mol% of isocyanurate structures based on the total amount of the uretdione, isocyanurate, allophanate, urethane, urea, biuret, iminooxadiazinedione and oxadiazinetrione structures present in the cured polyisocyanate composition A.

In a 9. item the present invention relates to the process according to any of items 1 to 4, wherein the curing of the reaction mixture in process step b) is conducted at room temperature.

In a 10. item the present invention relates to the process according to any of items 1 to 9, wherein the reaction mixture provided in process step a) is applied to a surface prior to the catalytic crosslinking in process step b).

In an 11. item the present invention relates to a coated material obtainable by the process according to item 10.

In a 12. item the present invention relates to the use of blocked polyisocyanates for preparation of polymers crosslinked by isocyanurate groups, wherein the blocking agents are selected from the group consisting of oximes and lactams.

In a 13. item the present invention relates to the use according to item 12, wherein the crosslinking of the blocked polyisocyanates is brought about by a crosslinking catalyst B comprising a carboxylate.

In a 14. item the present invention relates to the use according to either of items 12 and 13, wherein a surface is coated by the polymer.

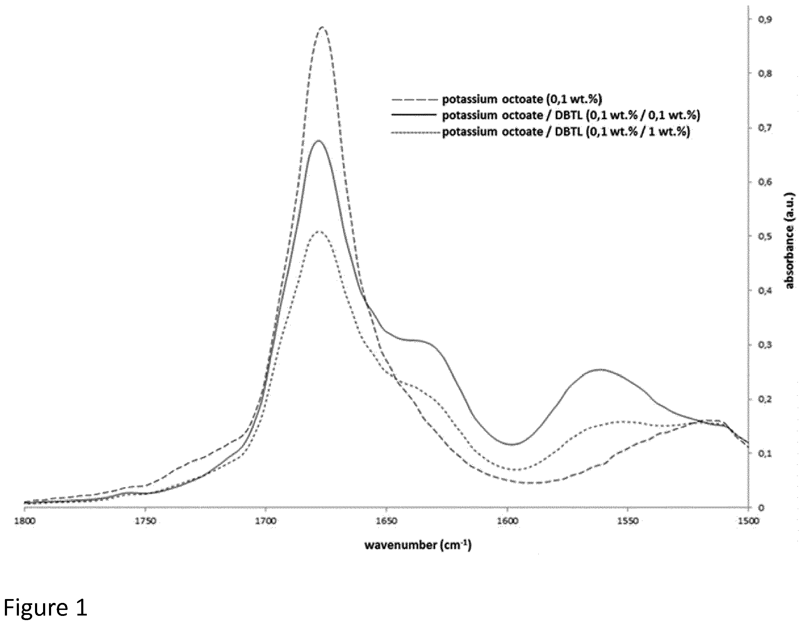

**Figure 1** shows IR spectra of differently-catalyzed coating materials.

The working examples which follow serve merely to illustrate the invention. They are not intended to limit the scope of protection of the patent claims in any manner.

### Examples

### Example 1

303.4 g of a polyether polyol with an OH number of 44 were prepared via simultaneous ethoxylation and propoxylation (EO/PO ratio of 2:8) of a 2:1 mixture of propylene glycol and glycerine, and 3-chloroproponic acid (0.02 g). The obtained polyether was reacted with 41.4 g of a mixture of 2,4-toluene diisocyanate and 2,6-toluene diisocyanate (80:20 mixture), by using a flask with a thermomether, a mechanical stirrer, a dropping funnel and a reflux condenser. The reaction mixture was heated to 80 °C until a theoretical NCO content of 2.9 wt% was obtained. The prepolymer was blocked with 4-nonylphenol (55.1 g) in the presence of N,N-dimethyldodecylamine (10 mg) and quenched with benzoyl chloride (10 mg).

| | |
|---|---|
| Blocked NCO content: | 2.46 wt.% |
| viscosity (23 °C): | 75.000 mPa·s |

### Methods

### Testing of pencil hardness

Pencil hardness is a scratch-testing method to ascertain paint film hardness, particularly in the case of smooth surfaces. The hardness corresponds here to that of the hardest pencil that does not damage the surface of the coating. Fine abrasive paper (400 grit, 600 grit or 800 grit) is used in order to produce a smooth surface for pencils with different hardnesses (6B to 7H). The testing of painted test specimens is conducted at room temperature (23-28°C), relative air humidity 50% ± 20%. The pencil tips are ground away to a flat surface with abrasive paper. At an angle of 45°, the pencil of moderate hardness (HB) is pushed over a few millimetres of the paint film to be tested, over which a very substantially constant force should be applied. The operation is repeated with a harder pencil each time until the edge of the pencil damages the coating. If the coating is damaged by a pencil of moderate hardness (HB), a softer pencil is used each time to approach the value where no damage occurs.

### Pendulum damping

Pendulum damping was measured according to DIN EN ISO 1522:2007-04 and is determined according to König. All measurements have been conducted at 50% air humidity and 23°C.

### Solvent Resistance

Resistance of the coatings against organic solvents and water was determined according to DIN EN ISO 4628-1 to -5:2016-07. Organic solvents tested were xylene (Xy), 1-Methoxy-2-propanyl acetate (MPA), ethyl acetate (EA) and acetone (AC). Solvent resistance has been determined on a scale from 0 to 5, 0 being the best value and 5 the worst.

### Microhardness

Microhardness was determined by an indentation test according to DIN EN ISO 14577-1 to -4:2017-04. The indenter is pyramid-shaped with a square base (according to Vickers). It is pressed with continuously increasing force into the surface of the sample. This was done with a Fischerscope HM2000 with a Vickers-indenter made by Fischer. The indentation measurement was conducted with a load / indentation depth, having an incremental force ramp from Fmin to Fmax with Fmin= 0,4 mN and Fmax = 7 mN and a ramp of 10 sec.

### DMA measurements

Dynamic mechanical analysis (DMA) is specified in DIN EN ISO 6721-1:2011-08. The measurements were conducted with a DMA Q800 by TA-Instruments. Measurements on free film stripes (15 mm x 6 mm x 13 µm) were performed within a temperature range of -100 °C to 250 °C at a heating rate of 2K·min-1, an excitation frequency of 10 Hz, and a deformation amplitude of 10 µm.

### Differential scanning calorimetry

Differential scanning calorimetry (DSC) is specified in DIN EN ISO 55672-1:2016-03. A DSC-7 calorimeter by Perkin Elmer was used for the analysis. Three heating cycles with temperatures between room temperature and 300°C were used. The heating rate was 20 K·min-1 and the cooling rate 320K·min-1. Cooling was achieved with a compressor and flushing of the cell with nitrogen (30 ml·min-1).

### Thermogravimetric analysis

Thermogravimetric analysis (TGA) was conducted according to DIN EN ISO 11358-1:2014-10. A thermogravimetric analyzer TGA-7 by Perkin-Elmer was used. The sample was analyzed in an open Pt-pan 45. Analysis was performed in a temperature range between 23 °C and 600 °C with a heating rate of 20 K min-1. Analysis was done based on the weight profile.

The abbreviation n.d. stands for non-determinable. In the context of the measurement of pendulum hardness n.d. stands for pendulum damping values of less than 15 seconds.

### Materials

Blocked polyisocyanates, BL 3175, BL 4265, PL 350 and BL 3272, have been purchased from Covestro AG. Unless otherwise specified, all other chemicals were obtained from Sigma-Aldrich.

### Catalyst 1

The catalyst was dissolved in MPA and contains 10% by weight of catalyst (potassium octoate/18-crown-6 equimolar). For the preparation of polyisocyanurates from blocked polyisocyanates, there was a study of which blocking agents are suitable for the preparation of polyisocyanurates. Standard blocking agents such as methyl ethyl ketoxime (MEKO), ε-caprolactam, 4-nonylphenol and 1,3-dimethylpyrazole (DMP) were used; the results are collated in *Table 1.*

The studies showed that MEKO-blocked (nos. 1-5), ε-caprolactam-blocked (nos. 6-10) and phenol-blocked (no. 17) polyisocyanates are converted to polyisocyanurates in the presence of potassium octoate; DMP-blocked polyisocyanates, by contrast, could not be converted to polyisocyanurates in the presence of this catalyst. In view of the suitability of pyrazoles as blocking agents for polyurethane systems, which has been described in principle in the literature, this result is surprising and shows that the findings relating to conventional polyurethane systems cannot be applied directly to the isocyanurate-crosslinked systems according to the invention.

The pendulum damping, pencil hardness and solvent resistance of the various systems are each within comparable ranges. However, it can be seen that pendulum damping increases with increasing IPDI content.

**Table 1: Crosslinking of blocked polyisocyanates with 0.1% by weight of catalyst 1 and subsequent determination of pendulum damping, pencil hardness and solvent resistance of the films. Sample temperature at 220 °C, 10 min (oven temperature at 250 °C). Films were prepared on glass substrates.**

| No | Sample | Ratio (BL 3175:BL 4265) | Blocking agent | Pendulum hardness according to Konig (s) | Pencil hardness | Solvent assay (Xy/MPA/EA/Ac) |
|---|---|---|---|---|---|---|
| 1 | BL 3175 SN / BL 4265 SN | 10:0 | MEKO | 174 | 6H | 1011 |
| 2 | BL 3175 SN / BL 4265 SN | 9:1 | MEKO | 159 | 6H | 1111 |
| 3 | BL 3175 SN / BL 4265 SN | 8:2 | MEKO | 173 | 6H | 1111 |
| 4 | BL 3175 SN / BL 4265 SN | 5:5 | MEKO | 181 | 6H | 1111 |
| 5 | BL 3175 SN / BL 4265 SN | 0:10 | MEKO | 191 | n.d. | 4444 |
| 6 | BL 3272 MPA / BL 2078/2 SN | 10:0 | ε-caprolactam | 151 | 6H | 0101 |
| 7 | BL 3272 MPA / BL 2078/2 SN | 9:1 | ε-caprolactam | 158 | 6H | 1001 |
| 8 | BL 3272 MPA / BL 2078/2 SN | 8:2 | ε-caprolactam | 169 | 7H | 0112 |
| 9 | BL 3272 MPA / BL 2078/2 SN | 5:5 | ε-caprolactam | 180 | 7H | 4444 |
| 10 | BL 3272 MPA / BL 2078/2 SN | 0:10 | ε-caprolactam | 194 | n.d. | 444 5 |
| 11 | PL 340 BA/SN / PL 350 MPA/SN | 10:0 | DMP | n.d. | n.d. | n.d. |
| 12 | PL 340 BA/SN / PL 350 MPA/SN | 9:1 | DMP | n.d. | n.d. | n.d. |
| 13 | PL 340 BA/SN / PL 350 MPA/SN | 8:2 | DMP | n.d. | n.d. | n.d. |
| 14 | PL 340 BA/SN / PL 350 MPA/SN | 5:5 | DMP | n.d. | n.d. | n.d. |
| 15 | PL 340 BA/SN / PL 350 MPA/SN | 0:10 | DMP | n.d. | n.d. | n.d. |
| 16 | example 1 (with catalyst 1) | - | 4-nonylphenol | n.d. | n.d. | n.d. |
| 17 | example 1 | - | 4-nonylphenol | 38 | 3B | 3345 |

| | | | | | | |
|---|---|---|---|---|---|---|
| n.d. = not determinable; MPA = methoxypropyl acetate; SN (solvent naphtha) | | | | | | |

The glass transition points confirm the results of the pendulum damping measurements: with increasing IPDI content, there is a rise in the glass transition point of 116°C for the pure HDI-based polyisocyanurate to 254°C for HDI/IPDI with a ratio of 2:8 (*Table 2,* no. 4). For polyisocyanurate no. 1 and no. 2, a second glass transition temperature at around 230 °C was observed.

**Table 2: glass transition temperature T_{g} of different mixtures. Catalyst 1 was used for all experiments. Sample temperature at 220 °C, 10 min (oven temperature at 250 °C). Films were prepared on glass substrates.**

| No. | sample | ratio (BL 3175/BL 4265) | catalyst (wt.%) | Tg (°C) | decomposition (°C) |
|---|---|---|---|---|---|
| 1 | BL 3175 SN / BL 4265 SN | 10:0 | 0.7 | 116/229 | 280 |
| 2 | BL 3175 SN / BL 4265 SN | 8:2 | 2.0 | 161/233 | 280 |
| 3 | BL 3175 SN / BL 4265 SN | 5:5 | 2.0 | 221 | 280 |
| 4 | BL 3175 SN / BL 4265 SN | 2:8 | 0.1 | 254 | 225 |

As depicted in Table 2, DSC and TGA measurements gave surprisingly high glass transition temperatures and thermal stabilities. Glass transition points of standard polyurethane coatings for automobiles (OEM coatings) are in the range of 40 to 60 °C. In addition, these coatings usually start to decompose at around 200 °C.

**Table 3: DMA and microhardness results. sample was cured at 220 °C, for 10 min; oven temperature at 250 °C. films prepared on glass substrates and then removed to give free films for DMA measurements. E"max = loss modulus.**

| No. | ratio (BL 3175: BL 4265) | DMA-Tg (dynamic Tg) | | DSC-Tg | storage modulus (rubber plateau) | microhardness measurement (nanoindentation) | | |
|---|---|---|---|---|---|---|---|---|
| | | E"ₘₐₓ | tan δ | | E'_{Gummi} | surface hardness | film hardness | depth hardness |
| | Gew.-% | °C | °C | °C | MPa | (0,4 mN) | (1 mN) | (7 mN) |
| 1 | 10:0 | 113.5 | 124.5 | 116 | 14.80 | 177 N/mm² | 162 N/mm² | 146 N/mm² |
| 2 | 8:2 | 163.0 | 175.0 | 161 | 17.16 | 198 N/mm² | 173 N/mm² | 160 N/mm² |
| 3 | 2:1 | 192.0 | 207.5 | 183 | 25.77 | - | - | - |
| 4 | 1:1 | 218.0 | 234.5 | 221 | 31.39 | 218 N/mm² | 194 N/mm² | 180 N/mm² |

The values of the glass transition temperatures of the DMA measurements are in line with the previously reported DSC measurements (*Table 3*)*.* In addition, it was found that the storage modulus at the rubber plateau increases with BL 4265 content. The microhardness measurements showed the same trend, as the surface hardness increases from 177 N/mm² (No. 1) to 218 N/mm² (No. 4) with increasing BL 4265 amount.

The results of the polyisocyanurate coatings (*vide supra*) were compared to US6133397A. In this patent, the authors do not specify to polyisocyanates the experiments were performed with. Since Desmodur® N 3300 was mentioned in the patent description, we decided to use this polyisocyanate for comparative studies. In this experimental series, experiment no. 1 (*Table 4*) is reproduced from US6133397A, column 9, example 6. All reaction parameters were kept in accordance to this patent.

**Table 4: Desmodur® N 3300 chosen according to descriptions of US6133397A. "Monoahl" (Lutensol® XL 70, Fa. BASF), an ethoxylated and propoxylated alcohol with an average molecular weigt of 560 g/mol was used, as described in the patent. According to the procedure, the coating formulation was cured at 135 °C, 30 min and afterwards stored for 2 weeks at room temperature. After this period of time, characterizations of the coatings were conducted. Formulation details: Desmodur® N 3300 (17.83 g), Lutensol XL 70 (4.71 g), trioctylphosphine (0.03 g), DBTL(0.27 g), BYK 331 (0.03 g) und MPA (6.69 g).**

| No. | catalyst | catlyst (wt.%) | monoahl | pencil hardness | T_{g} (°C) | decomposition (°C) | solvent resistance (Xy/MPA/EA/Ac) |
|---|---|---|---|---|---|---|---|
| 1 | trioctylphosphine | 0.2 | yes | H | 34 | 170 | 2 2 2 3 |
| 2 | catalyst 1 | 0.2 | yes | H | 31 | 175 | 2 2 2 3 |
| 3 | catalyst 1 | 0.2 | no | 3H | 56 | 170 | 0 0 0 1 |

Our comparative study revealed for experiment no. 1 (patent example) and experiment no. 2 *(catalyst 1* was used instead of trioctylphosphine) that both materials give the same glass transition temperature; the glass transition temperature of the coating known to the art is suitable for auto OEM coatings and auto refinish. In experiment no. 3, the coating was cured without monoahl. An increased glass transition temperature of around 55 °C was observed, still well below the glass transition temperatures which were observed for curing at 220 °C (Table 2). In addition, the decomposition of the coating materials in *Table 4* showed an up to 100 °C lower decomposition temperature than the high temperature cured systems (Table 2). Hence, these coating systems cannot be used for high temperature applications.

The deblocking temperature of blocked polyisocyanates can be lowered by addition of suitable catalysts. Accelerated deblocking inevitably enables faster crosslinking of the polyisocyanates. *Table* 5 summarizes the results of the studies on catalytic deblocking: the addition of DBTL in the presence of the crosslinking catalyst reduces the film hardnesses. This is equally true of the addition of 0.1% by weight of DBTL and 1.0% by weight of DBTL.

**Table 5: Effect of DBTL as cocatalyst on curing and crosslinking**

| No. | Sample | Ratio (HDI:IPDI) | Catalyst | Amount (% by wt.) | Pendulum damping according to König (s) |
|---|---|---|---|---|---|
| 220 °C, 10 min | | | | | |
| 1 | BL 3175 SN / BL 4265 SN | 10:0 | KOc | 0.1 | 174 |
| 2 | BL 3175 SN / BL 4265 SN | 9:1 | KOc | 0.1 | 159 |
| 3 | BL 3175 SN / BL 4265 SN | 8:2 | KOc | 0.1 | 173 |
| 4 | BL 3175 SN / BL 4265 SN | 5:5 | KOc | 0.1 | 181 |
| 5 | BL 3175 SN / BL 4265 SN | 2:8 | KOc | 0.1 | 191 |
| 6 | BL 3175 SN / BL 4265 SN | 10:0 | KOc / DBTL | 0.1/0.1 | 159 |
| 7 | BL 3175 SN / BL 4265 SN | 9:1 | KOc / DBTL | 0.1/0.1 | 162 |
| 8 | BL 3175 SN / BL 4265 SN | 8:2 | KOc / DBTL | 0.1/0.1 | 140 |
| 9 | BL 3175 SN / BL 4265 SN | 5:5 | KOc / DBTL | 0.1/0.1 | 168 |
| 10 | BL 3175 SN/BL 4265 SN | 2:8 | KOc / DBTL | 0.1/0.1 | 173 |
| 11 | BL 3175 SN / BL 4265 SN | 10:0 | KOc / DBTL | 0.1/1 | 87 |
| 12 | BL 3175 SN / BL 4265 SN | 9:1 | KOc / DBTL | 0.1/1 | 135 |
| 13 | BL 3175 SN / BL 4265 SN | 8:2 | KOc / DBTL | 0.1/1 | 95 |
| 14 | BL 3175 SN / BL 4265 SN | 5:5 | KOc / DBTL | 0.1/1 | 118 |
| 15 | BL 3175 SN / BL 4265 SN | 2:8 | KOc /DBTL | 0.1/1 | 164 |

The reduced hardness is probably attributable to the formation of urea groups. *Figure 1* shows the IR spectra of three samples based on BL 3175 SN. Sample no. 1 has been crosslinked exclusively with the crosslinking catalyst, catalyst 1, and has a sharp maximum of the isocyanurate group. Sample nos. 6 and 10, containing 0.1% by weight and 1.0% by weight of DBTL, show a shoulder at 1630 cm⁻¹ (CO stretch vibration of urea) and a band for the NH deformation vibration at 1580 cm⁻¹; this demonstrates the activation of the NCO group which is known from the literature and, hence, leads to an easier breakdown in the presence of moisture.

## Claims

1. Process for preparing a polymer crosslinked by at least one structure selected from the group consisting of uretdione, isocyanurate, allophanate, urea, biuret, iminooxadiazinedione and oxadiazinetrione structures, comprising the steps of
a) providing a reaction mixture comprising
(i) a polyisocyanate composition A containing blocked isocyanates, where the blocking agent is selected from the group consisting of phenols, oximes and lactams, and
(ii) at least one crosslinking catalyst B; and
b) curing the polyisocyanate composition A to give a polymer crosslinked by at least one structure selected from the group consisting of uretdione, isocyanurate, allophanate, urea, biuret, iminooxadiazinedione and oxadiazinetrione structures until not more than 20 % of the isocyanate groups originally present in the polyisocyanate composition A are present in the cured polymer;
with the proviso that the molar ratio of blocked and unblocked isocyanate groups to groups that are reactive toward isocyanate and are present in compounds containing more than one such group in the reaction mixture at the start of process step b) is at least 80%:20%.

2. Process according to claim 1, wherein the reaction mixture does not contain more than 0.2 wt.-% of organic and inorganic compounds of iron, lead, tin, bismuth and zinc.

3. Process according to Claim 1 or 2, wherein the polyisocyanate composition A comprises at least 10 wt.-% of at least one monomeric cycloaliphatic polyisocyanate and / or at least one oligomeric polyisocyanate comprising a cycloaliphatic polyisocyanate.

4. Process according to any one of Claims 1 to 3, wherein the polyisocyanate composition A has a content of monomeric diisocyanates which does not exceed 15 wt.-% based on the weight of the polyisocyanate composition A.

5. Process according to any one of Claims 1 to 4, wherein the polymer obtained in process step b) has a glass transition temperature of at least 80°C.

6. Process according to any one of Claims 1 to 5, wherein the crosslinking catalyst B comprises a carboxylate.

7. Process according to Claim 6, wherein the carboxylate is potassium 2-ethylhexanoate.

8. Process according to any one of Claims 1 to 7, wherein the curing in process step b) is conducted at a temperature of at least 130°C.

9. Process according to any one of Claims 1 to 8, wherein the cured reaction mixture contains at least 50 mol% of isocyanurate structures based on the total amount of the uretdione, isocyanurate, allophanate, urethane, urea, biuret, iminooxadiazinedione and oxadiazinetrione structures present in the cured polyisocyanate composition A.

10. Process according to any one of Claims 1 to 5, wherein the curing of the reaction mixture in process step b) is conducted at room temperature.

11. Process according to any one of Claims 1 to 10, wherein the reaction mixture provided in process step a) is applied to a surface prior to the catalytic crosslinking in process step b).

12. Coated material obtainable by the process according to Claim 11.

13. Use of blocked polyisocyanates for preparation of polymers crosslinked by isocyanurate groups, wherein the blocking agents are selected from the group consisting of oximes and lactams.

14. Use according to Claim 13, wherein the crosslinking of the blocked polyisocyanates is brought about by a crosslinking catalyst B comprising a carboxylate.

15. Use according to either of Claims 13 and 14, wherein a surface is coated by the polymer.

## Patentansprüche

1. Verfahren zur Herstellung eines Polymers, welches durch wenigstens eine Struktur ausgewählt aus der Gruppe bestehend aus Uretdion-, Isocyanurat-, Allophanat-, Harnstoff, Biuret-, Iminooxadiazindion- und Oxadiazintrionstrukturen vernetzt ist, enthaltend die Schritte
a) Bereitstellen eines Reaktionsgemisches enthaltend
(i) eine Polyisocyanatzusammensetzung A, die blockierte Isocyanate enthält, wobei das Blockierungsmittel ausgewählt ist aus der Gruppe bestehend aus Phenolen, Oximen und Lactamen, und
(ii) wenigstens einen Vernetzungskatalysator B; und
b) Aushärten der Polyisocyanatzusammensetzung A zu einem durch wenigstens eine Struktur ausgewählt aus der Gruppe bestehend aus Uretdion-, Isocyanurat-, Allophanat-, Harnstoff-, Biuret-, Iminooxadiazindion- und Oxadiazintrionstrukturen vernetzten Polymer, bis in dem ausgehärteten Polymer vorzugsweise nur noch höchstens 20 %, der ursprünglich in der Polyisocyanatzusammensetzung A enthaltenen Isocyanatgruppen vorhanden sind;
mit der Maßgabe, dass zu Beginn des Verfahrensschrittes b) im Reaktionsgemisch das molare Verhältnis von blockierten und unblockierten Isocyanatgruppen zu Gruppen, die gegenüber Isocyanat reaktiv sind und in Verbindungen enthalten sind, die mehr als eine derartige Gruppe tragen, wenigstens 80 % zu 20 % beträgt

2. Verfahren nach Anspruch 1, wobei das Reaktionsgemisch höchstens 0,2 Gew.-% organische und anorganische Verunreinigungen von Eisen, Blei, Zinn, Bismut und Zink enthält.

3. Verfahren nach Anspruch 1 oder 2, wobei die Polyisocyanatzusammensetzung A mindestens 10 Gew.-% mindestens eines monomeren cycloaliphatischen Polyisocyanats und/oder mindestens eines oligomeren Polyisocyanats, das ein cycloaliphatisches Polyisocyanat enthält, enthält.

4. Verfahren nach einem der Ansprüche 1 bis 3, wobei die Polyisocyanatzusammensetzung A einen Anteil an monomeren Diisocyanaten von höchstens 15 Gew.-%, bezogen auf das Gewicht der Polyisocyanatzusammensetzung A, aufweist.

5. Verfahren nach einem der Ansprüche 1 bis 4, wobei das in Verfahrensschritt b) erhaltene Polymer eine Glasübergangstemperatur von wenigstens 80°C aufweist.

6. Verfahren nach einem der Ansprüche 1 bis 5, wobei der Vernetzungskatalysator B ein Carboxylat enthält.

7. Verfahren nach Anspruch 6, wobei das Carboxylat Kalium-2-Ethylhexanoat ist.

8. Verfahren nach einem der Ansprüche 1 bis 7, wobei die Aushärtung in Verfahrensschritt b) bei einer Temperatur von wenigstens 130°C durchgeführt wird.

9. Verfahren nach einem der Ansprüche 1 bis 8, wobei das ausgehärtete Reaktionsgemisch wenigstens 50 Mol-% Isocyanuratstrukturen, bezogen auf die Gesamtmenge der in der ausgehärteten Polyisocyanatzusammensetzung A vorliegenden Uretdion-, Isocyanurat-, Allophanat-, Urethan-, Harnstoff-, Biuret-, Iminooxadiazindion- und Oxadiazintrionstrukturen, enthält.

10. Verfahren nach einem der Ansprüche 1 bis 5, wobei die Aushärtung des Reaktionsgemisches in Verfahrensschritt b) bei Raumtemperatur durchgeführt wird.

11. Verfahren nach einem der Ansprüche 1 bis 10, wobei das in Verfahrensschritt a) bereitgestellte Reaktionsgemisch vor der katalytischen Vernetzung in Verfahrensschritt b) auf eine Oberfläche aufgetragen wird.

12. Beschichteter Werkstoff, erhältlich durch das Verfahren nach Anspruch 11.

13. Verwendung von blockierten Polyisocyanaten zur Herstellung von Polymeren, welche durch Isocyanuratgruppen vernetzt sind, wobei das Blockierungsmittel ausgewählt ist aus der Gruppe bestehend aus Oximen und Lactamen.

14. Verwendung nach Anspruch 13, wobei die Vernetzung der blockierten Polyisocyanate durch einen Vernetzungskatalysator B bewirkt wird, der ein Carboxylat enthält.

15. Verwendung nach einem der Ansprüche 13 und 14, wobei die Oberfläche durch das Polymer beschichtet wird.

## Revendications

1. Procédé pour la préparation d'un polymère réticulé par au moins une structure choisie dans le groupe constitué par des structures de type uretdione, isocyanurate, allophanate, urée, biuret, iminooxadiazinedione et oxadiazinetrione, comprenant les étapes de
a) mise à disposition d'un mélange de réaction comprenant
(i) une composition A de polyisocyanate contenant des isocyanates bloqués, où l'agent bloquant est choisi dans le groupe constitué par des phénols, des oximes et des lactames, et
(ii) au moins un catalyseur de réticulation B ; et
b) durcissement de la composition A de polyisocyanate pour donner un polymère réticulé par au moins une structure choisie dans le groupe constitué par des structures de type uretdione, isocyanurate, allophanate, urée, biuret, iminooxadiazinedione et oxadiazinetrione jusqu'à ce que pas plus de 20 % des groupes isocyanate présents à l'origine dans la composition A de polyisocyanate ne sont présents dans le polymère durci ;
sous réserve que le rapport molaire de groupes isocyanate bloqués et non bloqués sur les groupes qui sont réactifs envers isocyanate et sont présents dans les composés contenant plus d'un tel groupe dans le mélange de réaction au début de l'étape de procédé b) est d'au moins 80 %:20 %.

2. Procédé selon la revendication 1, le mélange de réaction ne contenant pas plus de 0,2 % en poids de composés organiques et inorganiques du fer, du plomb, de l'étain, du bismuth et du zinc.

3. Procédé selon la revendication 1 ou 2, la composition A de polyisocyanate comprenant au moins 10 % en poids d'au moins un polyisocyanate cycloaliphatique monomérique et/ou d'au moins un polyisocyanate oligomérique comprenant un polyisocyanate cycloaliphatique.

4. Procédé selon l'une quelconque des revendications 1 à 3, la composition A de polyisocyanate possédant une teneur en diisocyanates monomériques qui n'excède pas 15 % en poids sur la base du poids de la composition A de polyisocyanate.

5. Procédé selon l'une quelconque des revendications 1 à 4, le polymère obtenu dans l'étape de procédé b) possédant une température de transition vitreuse d'au moins 80 °C.

6. Procédé selon l'une quelconque des revendications 1 à 5, le catalyseur de réticulation B comprenant un carboxylate.

7. Procédé selon la revendication 6, le carboxylate étant le 2-éthylhexanoate de potassium.

8. Procédé selon l'une quelconque des revendications 1 à 7, le durcissement dans l'étape de procédé b) étant conduit à une température d'au moins 130 °C.

9. Procédé selon l'une quelconque des revendications 1 à 8, le mélange de réaction durci contenant au moins 50 % en moles de structures de type isocyanurate sur la base de la quantité totale de structures de type uretdione, isocyanurate, allophanate, uréthane, urée, biuret, iminooxadiazinedione et oxadiazinetrione présentes dans la composition A de polyisocyanate durcie.

10. Procédé selon l'une quelconque des revendications 1 à 5, le durcissement du mélange de réaction dans l'étape de procédé b) étant conduit à température ambiante.

11. Procédé selon l'une quelconque des revendications 1 à 10, le mélange de réaction mis à disposition dans l'étape de procédé a) étant appliqué à une surface avant la réticulation catalytique dans l'étape de procédé b).

12. Matériau revêtu pouvant être obtenu par le procédé selon la revendication 11.

13. Utilisation de polyisocyanates bloqués pour la préparation de polymères réticulés par des groupes isocyanurate, les agents bloquants étant choisis dans le groupe constitué par des oximes et des lactames.

14. Utilisation selon la revendication 13, la réticulation des polyisocyanates bloqués étant provoquée par un catalyseur de réticulation B comprenant un carboxylate.

15. Utilisation selon l'une ou l'autre des revendications 13 et 14, une surface étant revêtue par le polymère.
